# EUROPEAN PATENT APPLICATION

(11) **EP 4 671 740 A1**
(43) Date of publication of application: **31.12.2025**
(21) Application number: 23924161.5
(22) Date of filing: 25.10.2023
(51) Int. Cl.: G01N 21/85, G01N 21/89

(54) **TABLET INSPECTION DEVICE**

(30) Priority: 24.02.2023 JP 2023026971
(71) Applicant: CKD CORPORATION, Komaki-shi, Aichi 485-8551 (JP)
(72) Inventor: TAGUCHI Yukihiro, Komaki-shi, Aichi 485-8551 (JP); IMAIZUMI Shiori, Komaki-shi, Aichi 485-8551 (JP); ODA Shozo, Komaki-shi, Aichi 485-8551 (JP)
(74) Representative: Winter, Brandl - Partnerschaft mbB
(86) International application number: PCT/JP2023/038510
(87) International publication number: WO 2024/176517

(57) **Abstract**

There is provided a tablet inspection device having a simple and compact configuration. A tablet inspection device 23 includes optical path conversion sheets 62a to 62d, each being configured to convert an optical path of light reflected from a one side face area of a tablet; and an imaging optical system 66 configured to form an image of the lights having the optical paths converted by the optical path conversion sheets 62a to 62d, on an imaging element 64c. The tablet inspection device 23 is configured to perform defective/ non-defective determination for a side face portion of the tablet, based on image data obtained by the lights imaged on the imaging element 64c. Each of the optical path conversion sheets 62a to 62d is provided to be laid across multiple lines of the tablets 5, when being viewed from an imaging element 64c-side. A plurality of the optical path conversion sheets 62a to 62d are provided along a transfer direction of the tablets. The plurality of optical path conversion sheets 62a to 62d respectively correspond to different one side face areas and are configured to convert the optical paths of lights reflected from the corresponding one side face areas into optical paths along a direction of an optical axis of the imaging optical system 66. A plurality of one side face areas respectively corresponding to the optical path conversion sheets 62a to 62d cover the entire circumference of the side face portion of the tablet.

## Description

### Technical Field

The present disclosure relates to a tablet inspection device configured to perform an inspection for side face portions of tablets.

### Background Art

A conventionally known configuration of a tablet inspection device includes an imaging unit configured to take an image of tablets transferred; and a determination unit configured to perform defective/ non-defective determination of the tablets, based on image data obtained by the imaging unit. One known tablet inspection device is configured to perform defective/ non-defective determination of side face portions of tablets (as described in, for example, Patent Literature 1).

The tablet inspection device disclosed in the above Patent Literature 1 includes an illumination device configured to irradiate tablets, which are transferred to a predetermined inspection area, with predetermined light; a plurality of (six) cameras placed around the inspection area and configured to take an image of the tablets from obliquely above; and an image processing unit configured to perform an inspection for side face portions of the tablets, based on image data obtained by thee cameras. Each of the cameras includes an imaging element (for example, a CCD area sensor) configured by a plurality of light-receiving elements arrayed in a two-dimensional arrangement; and an imaging optical system (a lens unit) configured to form an image of the tablets, which are located within the inspection area, on the imaging element. The imaging optical system is configured by an object-side telecentric optical system or by a both-side telecentric optical system. A light-receiving surface of the imaging element and a principal surface of the imaging optical system are set to satisfy the shine proof conditions with respect to a plurality of tablets located within the inspection area. The tablet inspection device of this configuration enables the sizes of the plurality of tablets to become approximately equal to one another in image data, irrespective of the distances between the imaging element and the respective tablets and also provides in-focus image data with regard to all the tablets located within the inspection area. As a result, this configuration enhances the inspection accuracy of the image processing unit.

Another known tablet inspection device includes a rotating drum configured to suck tablets and transfer the tablets in an arrangement of multiple lines; and a circular prism placed to surround a side face portion of the sucked tablet, and is configured to obtain image data with regard to the entire circumference of the side face portion of the tablet by using the circular prism (as described in, for example, Patent Literature 2).

### Citation List

### Patent Literature

Patent Literature 1: Japanese Patent 2019-39762A
Patent Literature 2: Japanese Patent H05-87744A

### Summary

### Technical Problem

In the tablet inspection device disclosed in the above Patent Literature 1, however, the imaging optical system is configured by, for example, the object-side telecentric optical system, and the light-receiving surface of the imaging element and the principal surface of the imaging optical system are set to satisfy the shine proof conditions with respect to the plurality of tablets. This is likely to increase the size of the cameras. Furthermore, in order to avoid a physical interference of the plurality of cameras, it is necessary to place these cameras at positions sufficiently away from the tablets. As a result, such a layout, along with the increase in the size of the cameras, is likely to increase the size of the whole device.

In the tablet inspection device disclosed in the above Patent Literature 2, on the other hand, every time the shape or the size of the tablets as an inspection object is changed, it is necessary to replace or adjust the circular prism to be suitable for the tablets. This reduces the convenience and the efficiency of the inspection.

By taking into account the circumstances described above, an object of the present disclosure is to provide a tablet inspection device that has a simple and compact configuration and that enhances the convenience and the efficiency of inspection.

### Solution to Problem

The following describes each of various aspects provided adequately to solve the problems described above. Functions and advantageous effects that are characteristic of each of the aspects are also described as appropriate.

Aspect 1. There is provided a tablet inspection device configured to perform an inspection for side face portions of a plurality of tablets, which are transferred in an arrangement of multiple lines. The tablet inspection device comprises an irradiation unit configured to irradiate the plurality of tablets with predetermined light; an imaging element used for imaging of the light emitted from the irradiation unit; an optical path conversion sheet configured to convert an optical path of light that is emitted from the irradiation unit and that is reflected from a one side face area, which is continuous in a circumferential direction of the side face portion; an imaging optical system configured to form an image of the light having the optical path converted by the optical path conversion sheet, on the imaging element; and a determination unit configured to perform defective/ non-defective determination of the side face portion, based on image data obtained from the light imaged on the imaging element. The optical path conversion sheet is configured to be laid across the multiple lines of the tablets when being viewed from an imaging element-side, and a plurality of the optical path conversion sheets are provided along a transfer direction of the tablets. The plurality of optical path conversion sheets are provided to respectively correspond to different one side face areas, and each of the optical path conversion sheets is configured to convert an optical path of light reflected from corresponding one of the one side face areas into an optical path along a direction of an optical axis of the imaging optical system. A plurality of the one side face areas corresponding to the respective optical path conversion sheets are configured to cover an entire circumference of the side face portion.

In the tablet inspection device of the above aspect 1, the optical path conversion sheet is configured to be laid across multiple lines of the tablets when being viewed from the imaging element-side, and a plurality of the optical path conversion sheets are provided along the transfer direction of the tablets. The tablet inspection device is configured to form an image of the lights having the optical paths converted by the optical path conversion sheet, on the imaging element via the imaging optical system. This allows for simultaneous imaging and inspection of the plurality of tablets, while simplifying the configuration of the device (camera) having the imaging element and the configuration of the tablet inspection device, thereby more certainly achieving size reduction and simplification of the tablet inspection device. Furthermore, the configuration of this aspect allows for simultaneous imaging of the plurality of tablets without requiring a plurality of the devices (cameras) respectively including the imaging element and thereby more effectively achieves size reduction of the tablet inspection device. As a result, this can provide the tablet inspection device of the simple and compact configuration.

Furthermore, in the tablet inspection device of the above aspect 1, the plurality of optical path conversion sheets are provided along the transfer direction of the tablets, and the plurality of one side face areas corresponding to the respective optical path conversion sheets cover the entire circumference of the side face portion of the tablet. The configuration of this aspect thus allows for an inspection for the entire circumference of the side face portion of the tablet.

Additionally, even in the case where the shape or the size of the tablets as the inspection object is changed, there may be not always necessary to replace or adjust the optical path conversion sheets. This accordingly enhances the convenience and the efficiency of the inspection.

In the tablet inspection device of the above aspect 1, the plurality of optical path conversion sheets are provided to respectively correspond to the different one side face areas, and each of the optical path conversion sheets is configured to convert the optical path of the light reflected from corresponding one of the one side face areas into the optical path along the direction of the optical axis of the imaging optical system. This configuration suppresses the part relating to each of the one side face areas in the image data from being affected by the light reflected from the other part of the tablet and provides the clearer contour and the clearer shape of the part relating to each of the one side face areas and the clearer contour and the clearer shape of any defective part (for example, a dirt or a crack) located in each of the one side face areas in the image data. As a result, this configuration can determine the presence or the absence of any defective part in the side face portion with the high accuracy and can specify the location of the defective part with the higher precision.

Aspect 2. In the tablet inspection device described in the above aspect 1, the imaging optical system may be configured to serve as an object-side telecentric optical system and may be provided with a diaphragm, which is configured to regulate the light imaged on the imaging element.

In the tablet inspection device of the above aspect 2, the diaphragm serves to regulate the light imaged on the imaging element, out of the lights having the optical paths converted by the optical path conversion sheets. This configuration accordingly enables appropriate image data for an inspection to be obtained more certainly and more readily.

Aspect 3. In the tablet inspection device described in the above aspect 1, the imaging optical system may be provided with an object-side lens that is configured to focus the lights having the optical paths converted by the optical path conversion sheets, and the object-side lens may be a Fresnel lens.

In the tablet inspection device of the above aspect 3, the object-side lens is a Fresnel lens and thereby has a relatively small thickness. This provides the device of the more compact configuration.

Aspect 4. In the tablet inspection device described in the above aspect 1, each of the optical path conversion sheets may have a surface with a plurality of protrusions formed thereon to be arranged in parallel to one another. Each of the protrusions may comprise an approximately vertical face having an angle of not less than 80 degrees and not greater than 95 degrees to a flat rear face of the optical path conversion sheet in a cross section perpendicular to an extending direction of the protrusions; and an inclined face having an angle of not less than 10 degrees and not greater than 55 degrees to the rear face in the cross section.

The configuration of the above aspect 4 enables each of the optical path conversion sheets to more reliably convert the optical path of the light reflected from the corresponding one of the one side face areas into an optical path along the direction of the optical axis of the imaging optical system, while more effectively preventing the optical path of the light reflected from the other part of the tablet from being converted into an optical path along the direction of the optical axis. This configuration more reliably provides the clearer contour and the clearer shape of the part relating to each of the one side face areas and the clearer contour and the clearer shape of any defective part. As a result, this configuration can determine the presence or the absence of any defective part in the side face portion with the higher accuracy and can specify the location of the defective part with the higher precision.

Aspect 5. In the tablet inspection device described in the above aspect 1, the irradiation unit may be placed between the plurality of optical path conversion sheets.

The configuration of the above aspect 5 enables the irradiation unit to be placed within a space between the optical path conversion sheets and thereby achieves further size reduction of the device.

Aspect 6. In the tablet inspection device described in the above aspect 1, the imaging optical system may be configured to form an image of light, which passes through between the plurality of optical path conversion sheets and which is reflected from a face of the tablet facing the imaging element-side, on the imaging element, and the determination unit may be configured to perform defective/ non-defective determination for the face of the tablet facing the imaging element-side, based on the image data.

The configuration of the above aspect 6 allows for an inspection for not only the side face portion of the tablet but the face of the tablet facing the imaging element-side. This configuration accordingly further enhances the inspection efficiency of the tablets.

The technical features described above in the respective aspects may be combined appropriately. For example, the technical features with regard to the above aspect 3 may be combined with the technical features with regard to the above aspect 2.

### Brief Description of Drawings

Fig. 1 is a perspective view illustrating a PTP sheet;
Fig. 2 is a partial enlarged sectional view illustrating the PTP sheet;
Fig. 3 is a perspective view illustrating a PTP film;
Fig. 4 is a schematic diagram illustrating the schematic configuration of a PTP packaging machine;
Fig. 5 is a partial cutaway schematic diagram illustrating the schematic configuration of a tablet inspection filling device;
Fig. 6 is a partial enlarged perspective view illustrating a tablet filling device;
Fig. 7 is a block diagram illustrating the schematic configuration of a tablet inspection device;
Fig. 8 is a perspective view illustrating the tablet inspection device;
Fig. 9 is a schematic sectional view taken along a line J-J in Fig. 8;
Fig. 10 is a schematic sectional view taken along a line K-K in Fig. 8;
Fig. 11 is a schematic plan view illustrating tablets and optical path conversion sheets;
Fig. 12 is a schematic perspective view illustrating optical path conversion sheets to indicate extending directions of protrusions thereof;
Fig. 13 is a schematic enlarged plan view illustrating one side face areas;
Fig. 14 is a schematic enlarged sectional view illustrating the optical path conversion sheet;
Fig. 15 is a schematic sectional view illustrating the tablet inspection device at the time of imaging tablets located in a first position in a section parallel to a transfer direction of tablets;
Fig. 16 is a schematic sectional view illustrating the tablet inspection device at the time of imaging the tablets located in the first position in a section perpendicular to the transfer direction of the tablets;
Fig. 17 is a schematic diagram illustrating part of image data obtained by imaging of the tablets located in the first position;
Fig. 18 is a schematic sectional view illustrating the tablet inspection device at the time of imaging tablets located in a second position;
Fig. 19 is a schematic diagram illustrating part of image data obtained by imaging of the tablets located in the second position;
Fig. 20 is a schematic sectional view illustrating the tablet inspection device at the time of imaging tablets located in a third position in the section parallel to a transfer direction of tablets;
Fig. 21 is a schematic sectional view illustrating the tablet inspection device at the time of imaging the tablets located in the third position in the section perpendicular to the transfer direction of the tablets;
Fig. 22 is a schematic diagram illustrating part of image data obtained by imaging of the tablets located in the third position;
Fig. 23 is a schematic sectional view illustrating the tablet inspection device at the time of imaging tablets located in a fourth position;
Fig. 24 is a schematic diagram illustrating part of image data obtained by imaging of the tablets located in the fourth position;
Fig. 25 is a schematic sectional view illustrating an illumination device according to another embodiment;
Fig. 26 is a schematic perspective view illustrating optical path conversion sheets according to another embodiment;
Fig. 27 is a schematic sectional view illustrating a tablet inspection device configured to perform imaging of front face portions or rear face portions of tablets from between a plurality of optical path conversion sheets according to another embodiment;
Fig. 28 is a schematic sectional view illustrating a tablet inspection device with an illumination device placed between optical path conversion sheets according to another embodiment;
Fig. 29 is a schematic sectional view illustrating a tablet inspection device with turning optical path conversion sheets upside down according to another embodiment; and
Fig. 30 is a partial cutaway schematic diagram illustrating the schematic configuration of a tablet inspection device and periphery thereof with tablets filled in pocket portions as an inspection target according to another embodiment.

### Description of Embodiments

The following describes one embodiment with reference to drawings. The configuration of a PTP sheet is described first in detail.

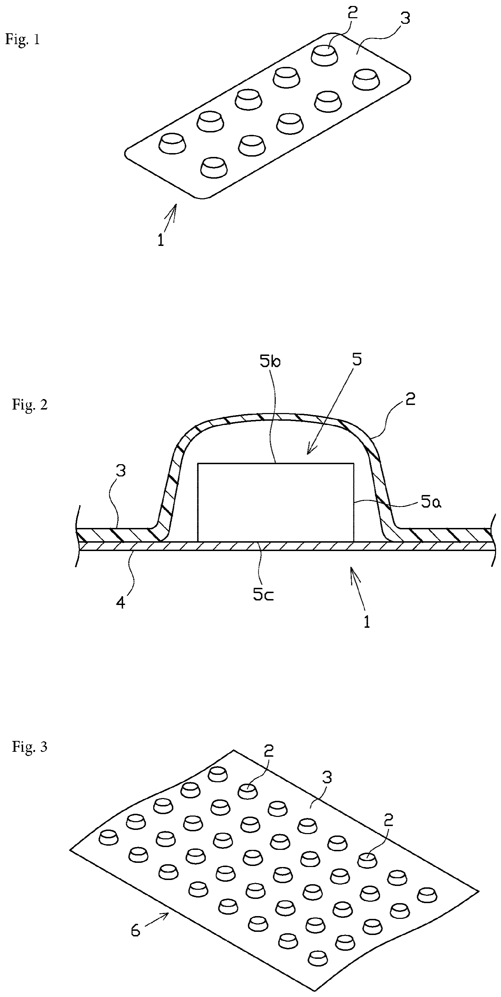

As shown in Fig. 1 and Fig. 2, a PTP sheet 1 includes a container film 3 provided with a plurality of pocket portions 2, and a cover film 4 mounted to the container film 3 such as to close the respective pocket portions 2.

The container film 3 is made of a transparent thermoplastic resin material, such as PP (polypropylene) or PVC (polyvinyl chloride) and has translucency. The cover film 4 is, on the other hand, made of an opaque material (for example, aluminum foil) with a sealant made of, for example, a polypropylene resin, provided on a surface thereof. The materials of the respective films 3 and 4 are not limited to these examples, but other material may be employed for the respective films 3 and 4.

The **PTP** sheet 1 is manufactured by punching out in a sheet-like form from a belt-like PTP film 6 (as shown in Fig. 3) comprised of a belt-like container film 3 and a belt-like cover film 4 and is formed in an approximately rectangular shape in planar view. The PTP sheet 1 has two pocket portion arrays formed in a sheet short side direction, and each pocket portion array includes five pocket portions 2 arranged along a sheet longitudinal direction. In other words, a total of ten pocket portions 2 are formed.

One tablet 5 is placed in each of the pocket portions 2. The tablet 5 according to the embodiment is a disk-like plain tablet in a circular shape in planar view and includes a side face portion 5a in a toric shape in planar view and a front face portion 5b and a rear face portion 5c placed across the side face portion 5a.

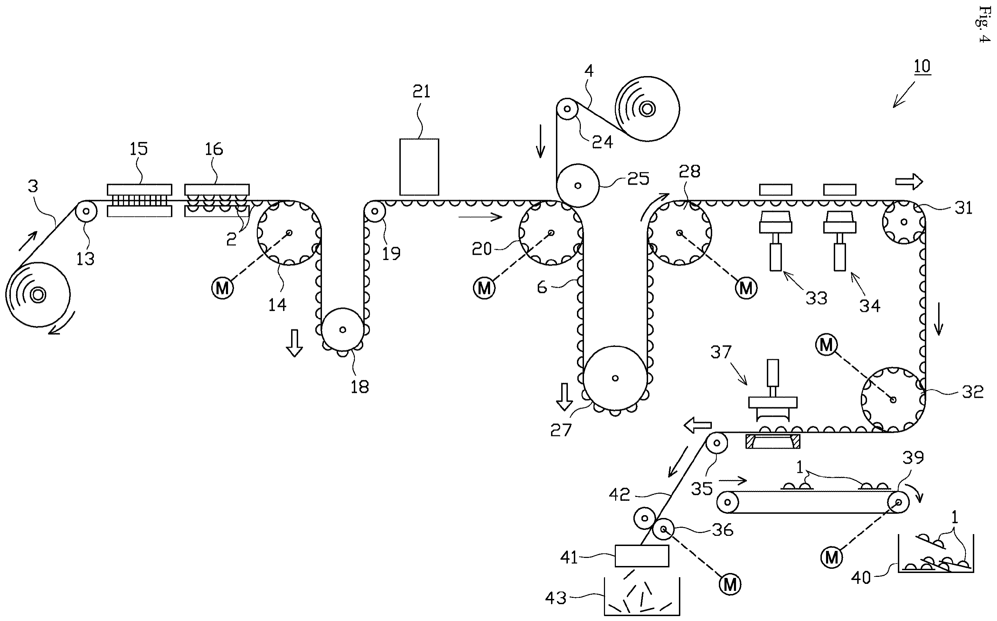

The following describes the schematic configuration of a PTP packaging machine 10 configured to manufacture the PTP sheet 1 described above, with reference to Fig. 4.

As shown in Fig. 4, a film roll of the belt-like container film 3 is wound in a roll form on a most upstream side of the PTP packaging machine 10. A pullout end of the container film 3 wound in the roll form is guided by a guide roll 13. The container film 3 is then laid on an intermittent feed roll 14 provided on a downstream side of the guide roll 13. The intermittent feed roll 14 is connected with a motor rotating in an intermittent manner, so as to transfer the container film 3 in an intermittent manner.

A heating device 15 and a pocket portion forming device 16 are sequentially placed along a transfer path of the container film 3 between the guide roll 13 and the intermittent feed roll 14. In the state that the container film 3 is heated to be relatively soft by the heating device 15, a plurality of pocket portions 2 are formed at predetermined positions of the container film 3 by the pocket portion forming device 16. Formation of the pocket portions 2 is performed during an interval between transfer operations of the container film 3 by the intermittent feed roll 14.

The container film 3 fed from the intermittent feed roll 14 is sequentially laid on a tension roll 18, a guide roll 19 and a film receiving roll 20 in this order. The film receiving roll 20 is connected with a motor rotating at a constant rate, so as to transfer the container film 3 continuously at a constant rate. The tension roll 18 is configured to pull the container film 3 in a direction of applying tension by an elastic force. This configuration prevents a slack of the container film 3 due to a difference between the transfer operation by the intermittent feed roll 14 and the transfer operation by the film receiving roll 20 and constantly keeps the container film 3 in the state of tension.

A tablet inspection filling device 21 is placed between the guide roll 19 and the film receiving roll 20 along the transfer path of the container film 3. The tablet inspection filling device 21 is configured to fill the pocket portions 2 with the tablets 5, while performing an inspection for the tablets 5. The details of the tablet inspection filling device 21 will be described later.

A film roll of the cover film 4 formed in the belt-like shape is, on the other hand, wound in a roll form on a most upstream side. A pullout end of the cover film 4 wound in the roll form is guided by a guide roll 24 to a heating roll 25.

The heating roll 25 is configured to be pressed against and brought into contact with the film receiving roll 20. The container film 3 and the cover film 4 are fed into between these two rolls 20 and 25. The container film 3 and the cover film 4 pass through between the two rolls 20 and 25 in the heated and pressed contact state, so that the cover film 4 is mounted to the container film 3 such as to close the respective pocket portions 2. This series of operations manufactures the belt-like PTP film 6 with the tablets 5 placed in the respective pocket portions 2.

The PTP film 6 fed from the film receiving roll 20 is sequentially laid on a tension roll 27 and an intermittent feed roll 28 in this order. The intermittent feed roll 28 is connected with a motor rotating in an intermittent manner, so as to transfer the PTP film 6 in an intermittent manner. The tension roll 27 is configured to pull the PTP film 6 in a direction of applying tension by an elastic force. This configuration prevents a slack of the PTP film 6 due to a difference between the transfer operation by the film receiving roll 20 and the transfer operation by the intermittent feed roll 28 and constantly keeps the PTP film 6 in the state of tension.

The PTP film 6 fed from the intermittent feed roll 28 is sequentially laid on a tension roll 31 and an intermittent feed roll 32 in this order. The intermittent feed roll 32 is connected with a motor rotating in an intermittent manner, so as to transfer the PTP film 6 in an intermittent manner. The tension roll 31 is configured to pull the PTP film 6 in a direction of applying tension by an elastic force. This configuration prevents a slack of the PTP film 6 between these intermittent feed rolls 28 and 32.

A slit formation device 33 and a stamping device 34 are sequentially placed along the transfer path of the PTP film 6 between the intermittent feed roll 28 and the tension roll 31. The slit formation device 33 has a function of forming cutting slits at predetermined positions of the PTP film 6. The stamping device 34 has a function of stamping marks at predetermined positions of the PTP film 6. The cutting slits and the marks are omitted from the illustration of Fig. 1 and other relevant drawings.

The PTP film 6 fed from the intermittent feed roll 32 is sequentially laid on a tension roll 35 and a continuous feed roll 36 in this order, downstream of the intermittent feed roll 32. A sheet punching device 37 is placed between the intermittent feed roll 32 and the tension roll 35 along the transfer path of the PTP film 6. The sheet punching device 37 has a function of punching out the outer periphery of each unit of PTP sheet 1 from the PTP film 6, i.e., a function of separating respective PTP sheets 1 from the PTP film 6.

The respective PTP sheets 1 obtained by the sheet punching device 37 are transferred by a conveyor 39 and are temporarily accumulated in a finished product hopper 40. In the case where a PTP sheet 1 is determined as defective by the tablet inspection filling device 21, however, the PTP sheet 1 determined as defective is not delivered to the finished product hopper 40 but is separately discharged by a non-illustrated defective sheet discharge mechanism.

A cutting device 41 is placed downstream of the continuous feed roll 36. An unnecessary film portion 42 that is a residual material portion (scrap portion) remaining in a belt-like shape after punch-out by the sheet punching device 37 is guided by the tension roll 35 and the continuous feed roll 36 and is then led to the cutting device 41. The cutting device 41 is configured to cut the unnecessary film portion 42 into predetermined dimensions. The cut pieces of the unnecessary film portion 42 (scraps) are accumulated in a scrap hopper 43 and are then separately disposed of.

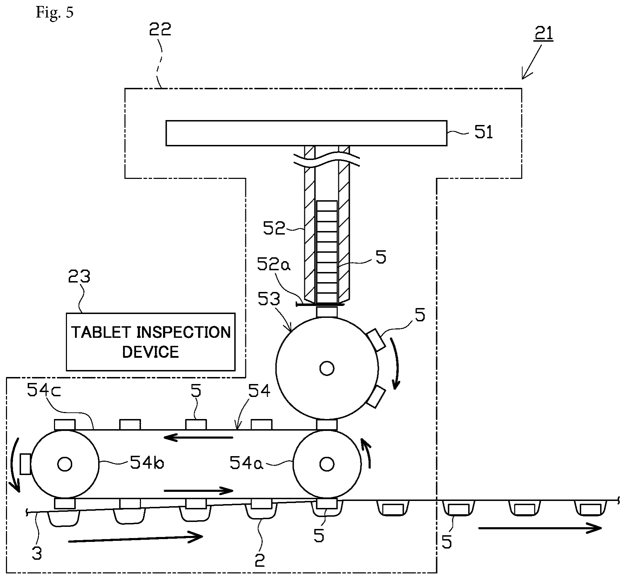

The following describes the tablet inspection filling device 21. Fig. 5 is a partial cutaway schematic diagram illustrating the schematic configuration of the tablet inspection filling device 21 and periphery thereof. As shown in Fig. 5, the tablet inspection filling device 21 includes a tablet filling device 22 and a tablet inspection device 23. The operations of the tablet filling device 22 and the tablet inspection device 23 are controlled by a non-illustrated control device.

The tablet filling device 22 includes a storage portion 51, supply chutes 52, a rotary drum 53 and a suction belt 54, which are sequentially placed from an upstream side along a supply pathway of the tablets 5.

The storage portion 51 is configured to accumulate a large number of tablets 5 therein and to successively supply the tablets 5 therefrom to the supply chutes 52.

The supply chutes 52 are provided corresponding to the positions of the respective pocket portions 2 in a width direction of the container film 3 that is horizontally transferred (i.e., in a sheet depth direction of Fig. 5). More specifically, according to the embodiment, five supply chutes 52 are provided in parallel to one another along the width direction of the container film 3. Each of the supply chutes 52 is in a tubular shape and is configured to load the tablets 5 in a lateral attitude in one line in a vertical direction.

Each of the supply chutes 52 is provided with a shutter 52a that is placed in the vicinity of a lower side opening of the supply chute 52 and that is configured to open and close the lower side opening. An opening and closing operation of the shutter 52a causes one tablet 5 each time to freely fall from the supply chute 52 and and to be supplied to the rotary drum 53.

The rotary drum 53 is configured to receive the tablets 5 supplied from the supply chutes 52 and to transfer the received tablets 5 toward a suction belt 54-side while sucking and holding the tablets 5. The rotary drum 53 is in a cylindrical shape, is pivotally supported in a rotatable manner, and is driven and rotated by a driving unit, such as a motor.

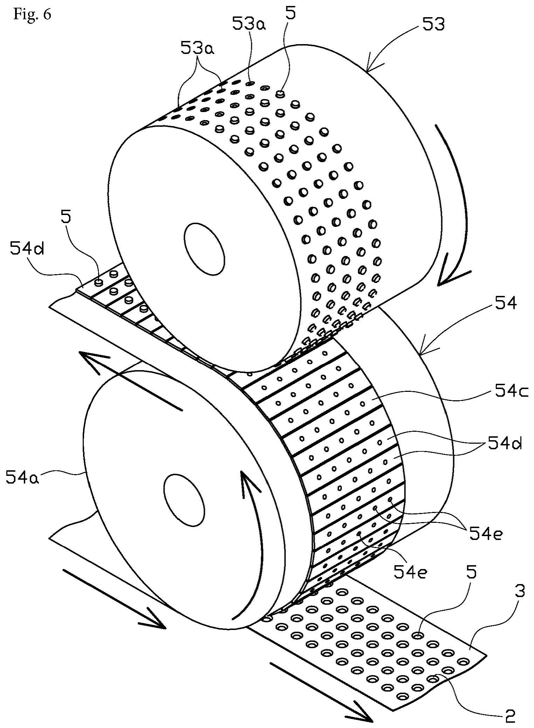

Furthermore, as shown in Fig. 6, the rotary drum 53 has a large number of suction elements 53a that are formed on an outer circumferential face of the rotary drum 53 and that are configured to suck and hold the tablets 5. The suction elements 53a are arranged regularly at predetermined intervals in a circumferential direction and in an axial direction of the rotary drum 53. According to the embodiment, five lines of the suction elements 53a arrayed in the circumferential direction of the rotary drum 53 are provided at equal intervals in the direction of a rotation axis of the rotary drum 53.

Each of the suction elements 53a is in a vacuuming state (in a state that a negative pressure is applied) by a predetermined vacuum pump (not shown), while the suction element 53a is moved from a position immediate above the rotation axis of the rotary drum 53 to the vicinity of a position immediate below the rotation axis, accompanied with rotation of the rotary drum 53. This causes each of the suction elements 53a to suck and hold the tablet 5, while the suction element 53a is moved from the position immediate above the rotation axis of the rotary drum 53 to the vicinity of the position immediate below the rotation axis. Each of the suction elements 53a is, on the other hand, in a state open to the atmosphere, while the suction element 53a is moved from the position immediate below the rotation axis of the rotary drum 53 to the vicinity of the position immediate above the rotation axis, accompanied with rotation of the rotary drum 53. This causes the suction of each of the tablets 5 which is sucked and held by the rotary drum 53, to be released at the position immediate below the rotation axis of the rotary drum 53.

The suction belt 54receives the tablets 5 from the rotary drum 53, sucks and transfers the received tablets 5 and eventually fills the tablets 5 into (the pocket portions 2 of) the container film 3. As shown in Fig. 5 and Fig. 6, the suction belt 54 includes a pair of pullies 54a and 54b, a transfer belt 54c provided by connecting a plurality of holder plates 54d in a belt-like arrangement, and a suction mechanism (not shown).

The pair of pullies 54a and 54b are placed across an interval along the transfer path of the container film 3 and are configured to be rotatable around respective rotation axes, which are parallel to the rotation axis of the rotary drum 53, by respective predetermined driving units.

The transfer belt 54c is laid over the pair of pullies 54a and 54b and is rotated and moved with rotations of the pullies 54a and 54b. A region of the transfer belt 54c that moves from the pully 54b to the pully 54a (i.e., a region of the transfer belt 54c having an outer circumferential face thereof facing down) is placed near to the transfer path of the container film 3 and is continuously moved at an identical rate with a transfer rate of the container film 3 by the film receiving roll 20.

Furthermore, each of the holder plates 54d has a plurality of suction holes 54e that are arranged at equal intervals along a width direction of the transfer belt 54c. According to the embodiment, five lines of the suction holes 54e arrayed in a circumferential direction of the transfer belt 54c are provided at equal intervals in the width direction of the transfer belt 54c.

Moreover, the suction belt 54 is configured to make the respective suction holes 54e in a vacuuming state (in a state that a negative pressure is applied) by the operation of the suction mechanism. This enables the suction belt 54 to suck and hold the tablets 5 at the positions where the respective suction holes 54e are formed.

Additionally, a non-illustrated blow mechanism is provided inside of the suction belt 54. The blow mechanism is configured to blow the pressurized air toward the suction holes 54e. Blowing the air by the blow mechanism releases the suction of the tablets 5 by the suction belt 54. According to the embodiment, releasing the suction of the tablets 5 by the blow mechanism enables the tablets 5 to be filled into the pocket portions 2 at a predetermined filling position (a position immediate below the rotation axis of the pully 54a according to the embodiment).

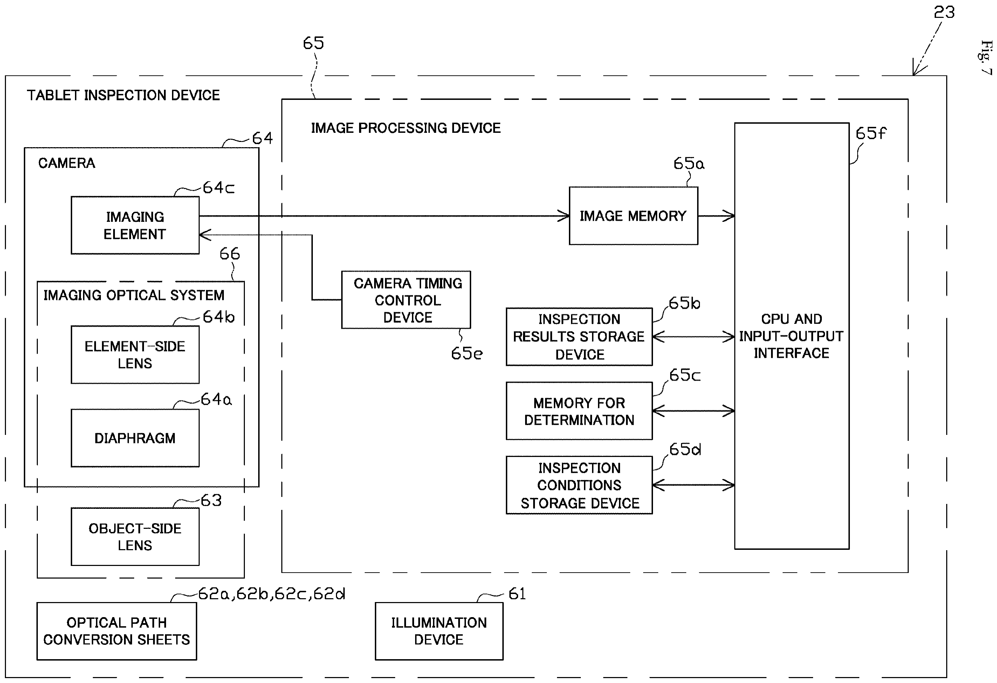

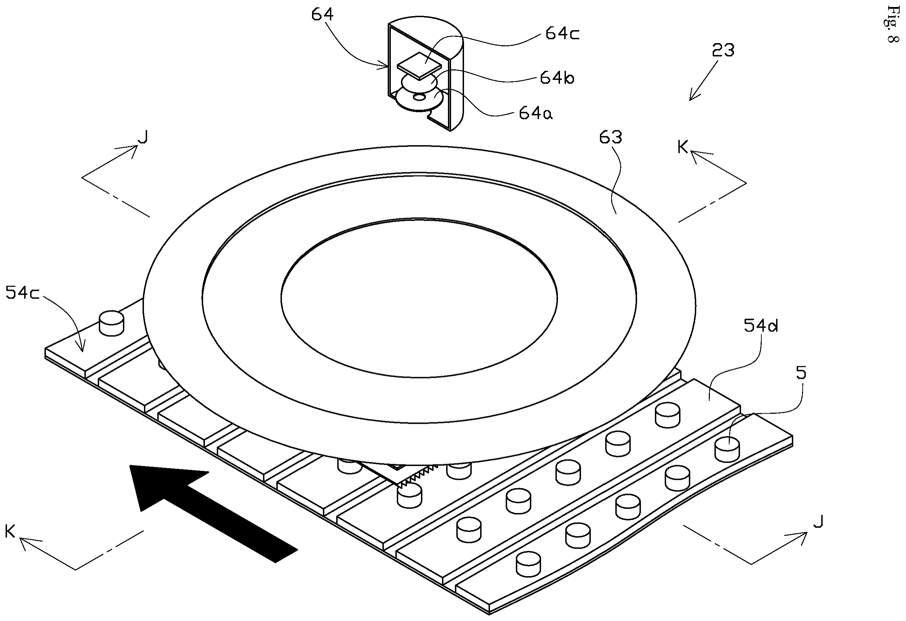

The tablet inspection device 23 is described next. The tablet inspection device 23 is provided corresponding to a transfer path of the tablets 5 from the pully 54a toward the pulley 54b and is configured to perform an inspection for the side face portions 5a of the tablets 5 that are transferred in an arrangement of multiple lines. As shown in Figs. 7 to 10, the tablet inspection device 23 includes an illumination device 61, optical path conversion sheets 62a, 62b, 62c and 62d, an object-side lens 63, a camera 64, and an image processing device 65. The tablet inspection device 23 may also include a display unit configured to display information stored in the image processing device 65 and an input unit (for example, a keyboard) configured to input information into the image processing device 65. According to the embodiment, the illumination device 61 configures the "irradiation unit", and the image processing device 65 configures the "determination unit". In the description below, the optical path conversion sheets 62a, 62b, 62c and 62d may be expressed in a simplified manner as "optical path conversion sheets 62a to 62d".

The illumination device 61 is configured to irradiate a plurality of the tablets 5 with predetermined light (for example, ultraviolet light). The illumination device 61 includes a light source 61a configured by, for example, an LED, and a light guide plate 61b. The light guide plate 61b is configured to guide the light emitted from the light source 61a to the tablets 5. The light guide plate 61b may be, for example, a thin plate made of, for example, an acrylic material with dots formed on a surface thereof by printing or ultrasonic machining and may have a surface-emitting capability.

Additionally, the light guide plate 61b is configured to receive the light from the light source 61a and emit light toward the tablets 5, while not emitting light toward an opposite side (toward a camera 64-side) that is opposite to the tablets 5. The light guide plate 61b is also configured to allow the light reflected from the tablets 5 to pass therethrough.

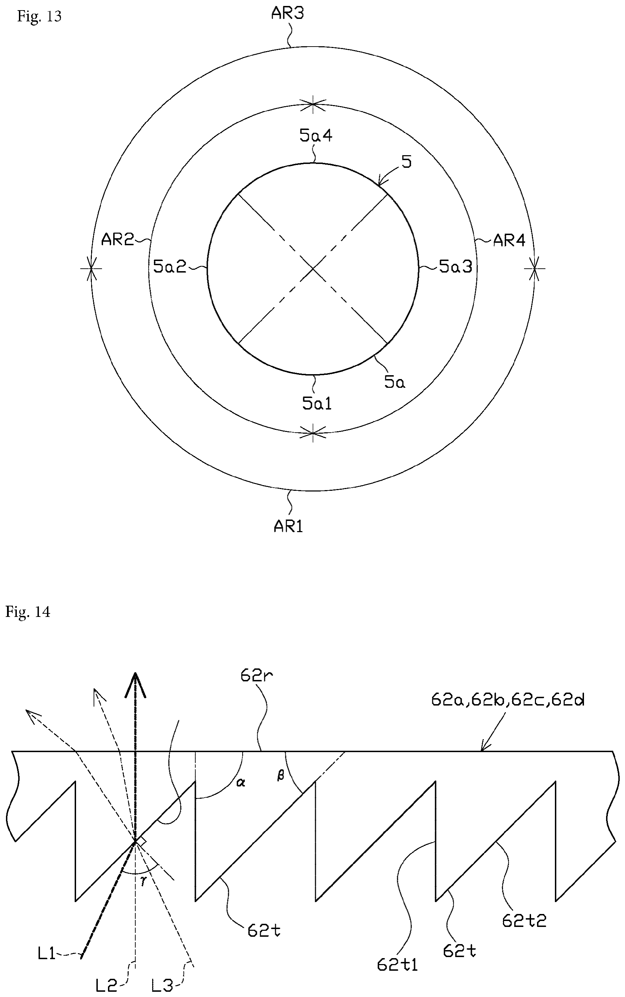

The optical path conversion sheets 62a to 62d are configured to convert the optical paths of lights reflected from one side face areas AR1, AR2, AR3 and AR4 (shown in Fig. 13), which are continuous in a circumferential direction of the side face portion 5a, into optical paths along a direction of an optical axis OA of an imaging optical system 66 described later (i.e., optical paths parallel to the optical axis OA). In the description below, the one side face areas AR1, AR2, AR3 and AR4 may be expressed in a simplified manner as "one side face areas AR1 to AR4".

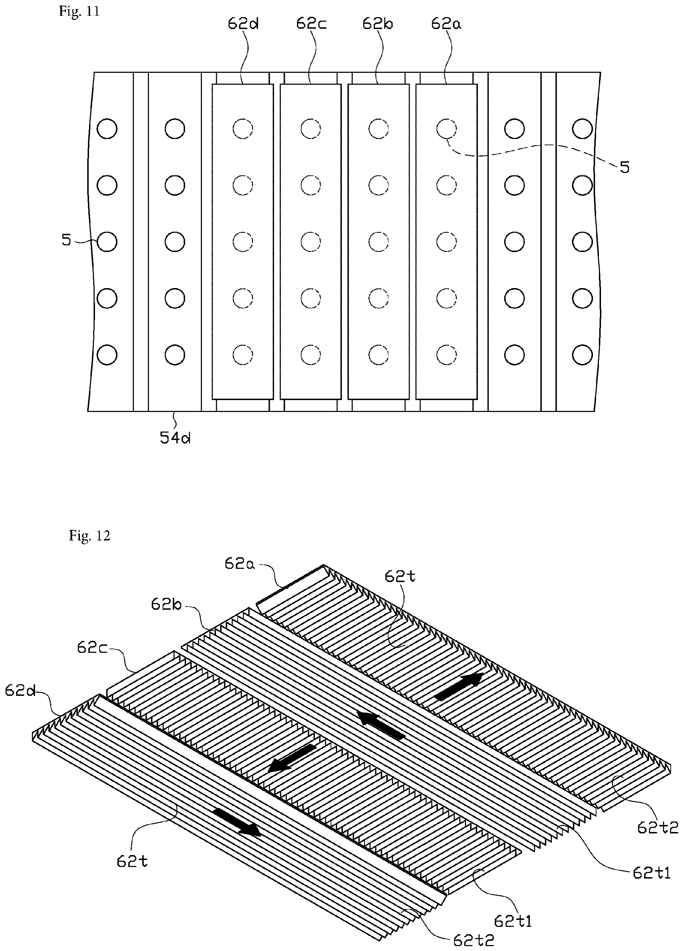

The optical path conversion sheets 62a to 62d are placed between the illumination device 61 and the tablets 5 (the suction belt 54) and are provided at fixed intervals along the transfer direction of the tablets 5. Furthermore, the optical path conversion sheets 62a to 62d (more specifically, flat rear faces 62r thereof (shown in Fig. 14)) are set perpendicular to the optical axis OA and parallel to the transfer direction of the tablets 5. Moreover, each of the optical path conversion sheets 62a to 62d is provided to be laid across a plurality of lines of the tablets 5 (five lines according to the embodiment) when being viewed from the camera 64-side (more specifically, from an imaging element 64c-side described later) (as shown in Fig. 11).

Additionally, each of the optical path conversion sheets 62a to 62d corresponds to different one of the one side face areas AR1 to AR4 and is configured to convert the optical path of the light reflected from the corresponding one of the one side face areas AR1 to AR4 into a direction along the direction of the optical axis OA. The entire circumference of the side face portion 5a is covered by the one side face areas AR1 to AR4 corresponding to the optical path conversion sheets 62a to 62d.

According to the embodiment, the one side face area AR1 corresponding to the optical path conversion sheet 62a is an area including the entirety of a left-side side face portion 5a1, part of a downstream-side side face portion 5a2, and part of an upstream-side side face portion 5a3 in the side face portion 5a (as shown in Fig. 13). The left-side side face portion 5a1 is a region on one end side in the width direction of the suction belt 54, in the side face portion 5a. The downstream-side side face portion 5a2 is a region on a downstream side in the transfer direction of the tablets 5, in the side face portion 5a. The upstream-side side face portion 5a3 is a region on an upstream side in the transfer direction of the tablets 5, in the side face portion 5a.

The one side face area AR2 corresponding to the optical path conversion sheet 62b is an area including the entirety of the downstream-side side face portion 5a2, part of the left-side side face portion 5a1, and part of a right-side side face portion 5a4 in the side face portion 5a (as shown in Fig. 13). The right-side side face portion 5a4 is a region on the other end side in the width direction of the suction belt 54, in the side face portion 5a.

Furthermore, the one side face area AR3 corresponding to the optical path conversion sheet 62c is an area including the entirety of the right-side side face portion 5a4, part of the downstream-side side face portion 5a2, and part of the upstream-side side face portion 5a3 in the side face portion 5a (as shown in Fig. 13).

Additionally, the one side face area AR4 corresponding to the optical path conversion sheet 62d is an area including the entirety of the upstream-side side face portion 5a3, part of the left-side side face portion 5a1, and part of the right-side side face portion 5a4 in the side face portion 5a (as shown in Fig. 13).

Furthermore, a plurality of protrusions 62t arranged in parallel to one another are formed on a face on the tablets 5-side of each of the optical path conversion sheets 62a to 62d. The face with the protrusions 62t formed thereon is referred to as the surface of each of the optical path conversion sheets 62a to 62d.

As shown in Fig. 14, each of the protrusions 62t is in an approximately right triangle shape in a cross section perpendicular to an extending direction of the protrusions 62t and includes an approximately vertical face 62t1 and an inclined face 62t2. Hatching is omitted from Fig. 14 for the convenience of illustration.

The approximately vertical face 62t1 is a face that is extended in a direction approximately perpendicular to a flat rear face 62r of each of the optical path conversion sheets 62a to 62d in the above cross section and that has an angle α of not less than 80 degrees and not greater than 95 degrees relative to the rear face 62r.

The inclined face 62t2 is a face that is extended in an oblique direction relative to the rear face 62r in the above cross section and that has an angle β of not less than 10 degrees and not greater than 55 degrees relative to the rear face 62r. Refraction of light by the inclined face 62t2 causes the optical path of light reflected from the side face portion 5a to be converted into an optical path along the optical axis OA. More specifically, an optical path of light L1 (shown by a thick broken line in Fig. 14) having an incidence angle γ to the inclined face 62t2, which is a predetermined angle greater than the angle β, is converted into an optical path along the optical axis OA. Optical paths of lights L2 and L3 having incidence angles to the inclined face 62t2, which are not greater than the angle β are, on the other hand, not converted into optical paths along the optical axis OA but are converted into optical paths oblique to the optical axis OA,

The extending directions of the protrusions 62t in the respective optical path conversion sheets 62a to 62d differ by 90 degrees (as shown in Fig. 12: the extending directions of the protrusions 62t are shown by arrows in Fig. 12). The extending direction of the protrusions 62t herein denotes a direction going along the protrusions 62t in such a manner that the approximately vertical faces 62t1 of the protrusions 62t are located on a right side and the inclined faces 62t2 of the protrusions 62t are located on a left side, when the surface (the face with the protrusions 62t formed thereon) of each of the optical path conversion sheets 62a to 62d is viewed from a front side (in bottom view according to the embodiment).

According to the embodiment, the extending direction of the protrusions 62t in the optical path conversion sheet 62a is a direction parallel to the transfer direction of the tablets 5 and is a direction opposite to the transfer direction.

Furthermore, the extending direction of the protrusions 62t in the optical path conversion sheet 62b is a direction perpendicular to the transfer direction of the tablets 5 and is a direction from the other end side in the width direction of the suction belt 54 toward one end side in the width direction (i.e., a direction from a line of the tablets 5 on the other end side toward a line of the tablets 5 on one end side).

Moreover, the extending direction of the protrusions 62t in the optical path conversion sheet 62c is a direction parallel to the transfer direction of the tablets 5 and is a direction identical with the transfer direction.

Additionally, the extending direction of the protrusions 62t in the optical path conversion sheet 62d is a direction perpendicular to the transfer direction of the tablets 5 and is a direction from one end side in the width direction of the suction belt 54 toward the other end side in the width direction (i.e., a direction from a line of the tablets 5 on one end side toward a line of the tablets 5 on the other end side).

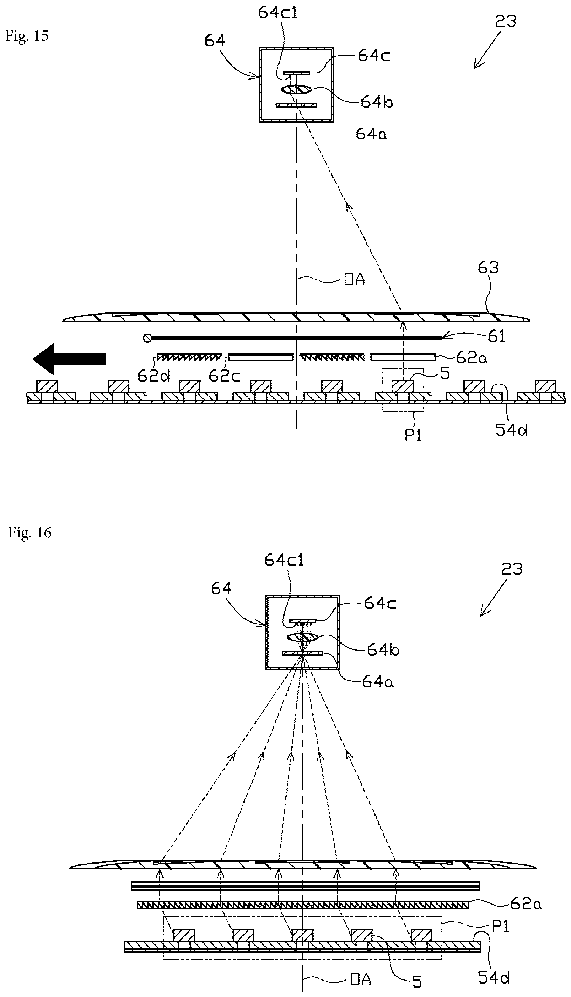

According to the embodiment, lights reflected from the one side face areas AR1 of the tablets 5 located in a predetermined first position P1 (shown in Fig. 15 and Fig. 16) enter the inclined faces 62t2 of the optical path conversion sheet 62a, while the optical paths of the lights reflected from the one side face areas AR1 are converted into optical paths along the optical axis OA by the optical path conversion sheet 62a.

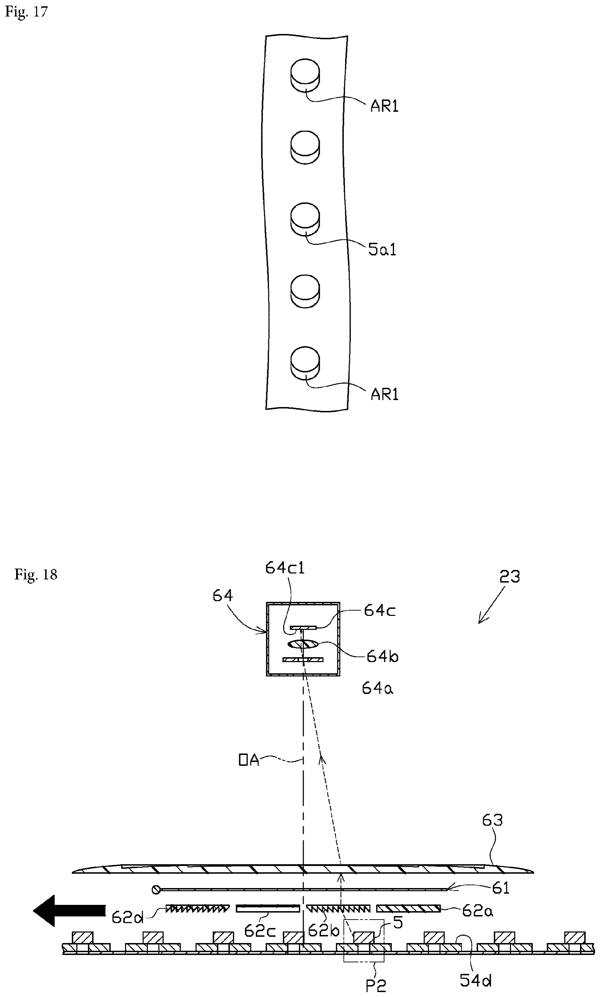

Furthermore, lights reflected from the one side face areas AR2 of the tablets 5 located in a predetermined second position P2 (shown in Fig. 18) enter the inclined faces 62t2 of the optical path conversion sheet 62b, while the optical paths of the lights reflected from the one side face areas AR2 are converted into optical paths along the optical axis OA by the optical path conversion sheet 62b.

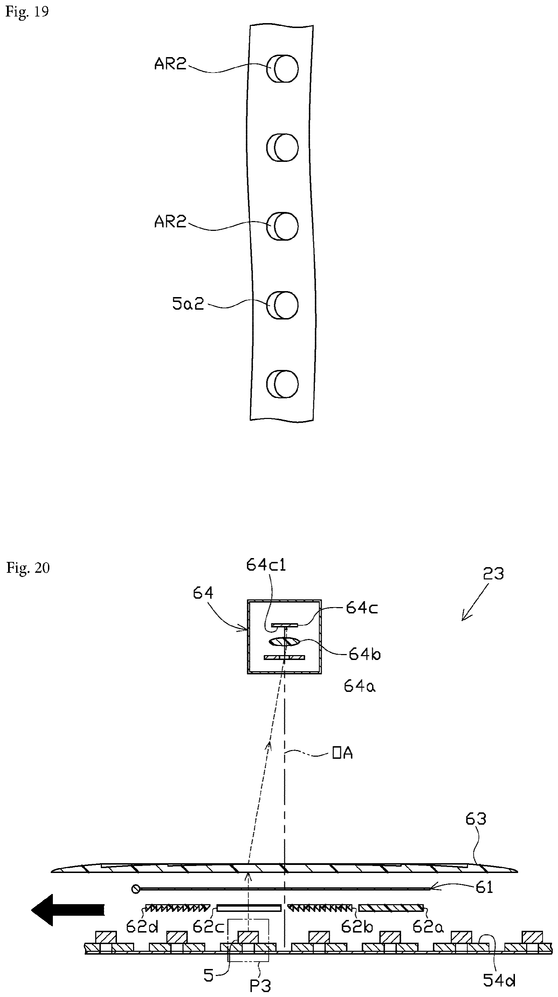

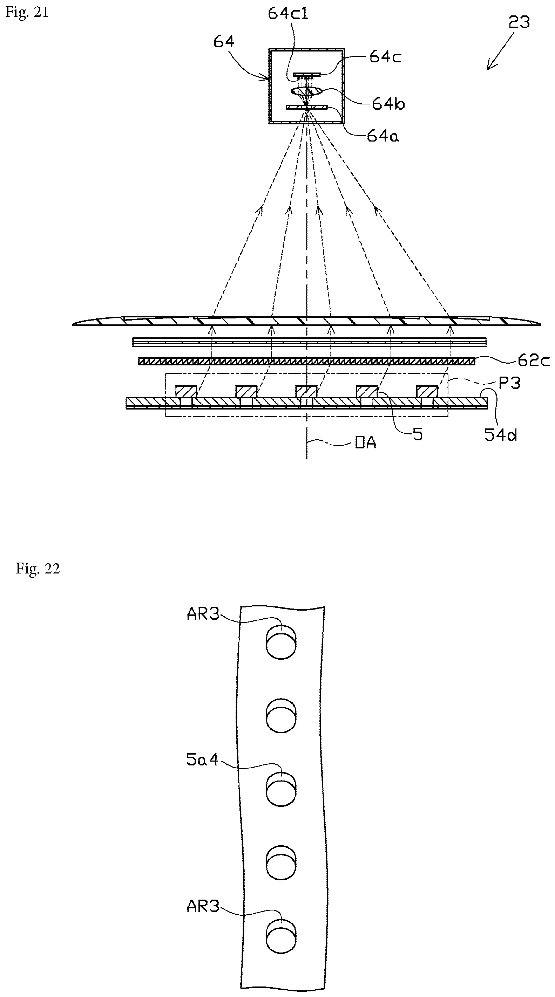

Moreover, lights reflected from the one side face areas AR3 of the tablets 5 located in a predetermined third position P3 (shown in Fig. 20 and Fig. 21) enter the inclined faces 62t2 of the optical path conversion sheet 62c, while the optical paths of the lights reflected from the one side face areas AR3 are converted into optical paths along the optical axis OA by the optical path conversion sheet 62c.

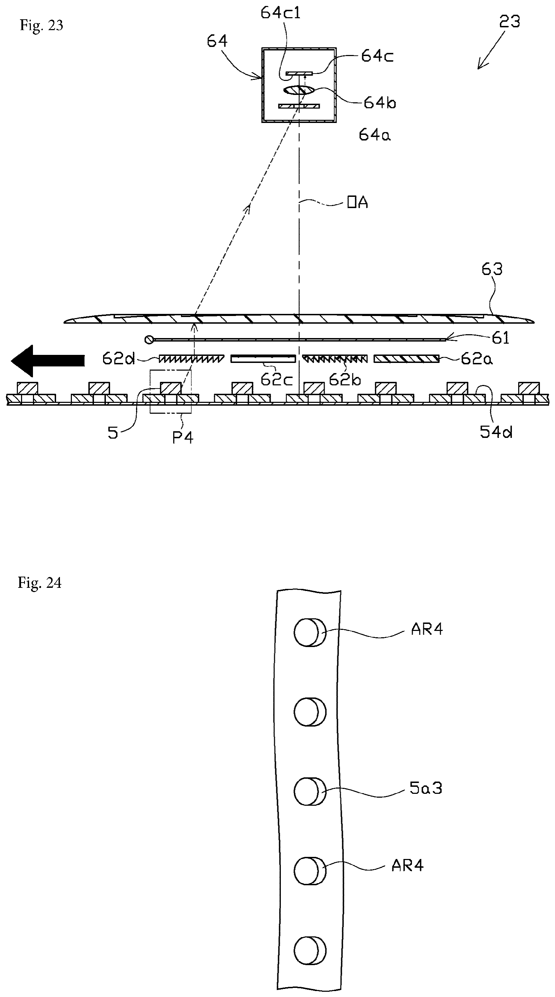

Additionally, lights reflected from the one side face areas AR4 of the tablets 5 located in a predetermined fourth position P4 (shown in Fig. 23) enter the inclined faces 62t2 of the optical path conversion sheet 62d, while the optical paths of the lights reflected from the one side face areas AR4 are converted into optical paths along the optical axis OA by the optical path conversion sheet 62d.

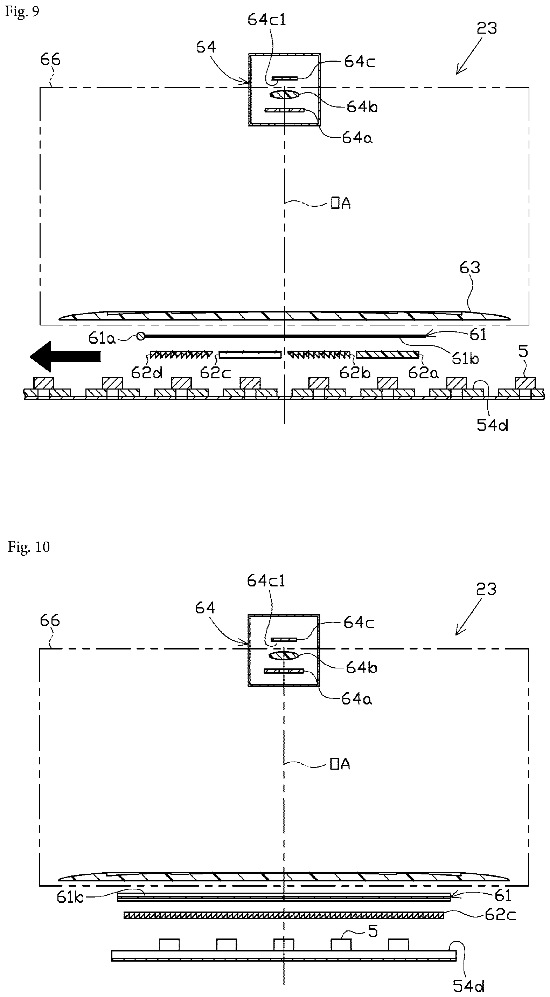

Referring back to Fig. 9 and Fig. 10, the object-side lens 63 is placed between the camera 64 and the illumination device 61 and is configured to focus the lights having the optical paths converted by the optical path conversion sheets 62a to 62d. According to the embodiment, the object-side lens 63 is configured by a Fresnel lens and is a thin plate material made of a predetermined resin and provided with projections in a cutting blade shape arranged concentrically in a stepwise manner. Each of the projections serves as a refracting surface, and the object-side lens 63 has a similar function to that of a single general lens.

The camera 64 is placed on an opposite side to the faces of the tablets 5 sucked by the suction belt 54 and is configured by a camera (for example, a CCD camera or a CMOS camera) that has sensitivity to at least the light emitted from the illumination device 61. The camera 64 includes a diaphragm 64a, an element-side lens 64b and an imaging element 64c.

The diaphragm 64a is placed between the object-side lens 63 and the element-side lens 64b and is configured to restrict the amount of light entering the imaging element 64c from the object-side lens 63 and thereby regulate the light imaged on a light-receiving surface 64c1 of the imaging element 64c described later.

The element-side lens 64b is configured to convert the optical paths of the lights passing through the object-side lens 63, such as to make principal rays thereof parallel to the optical axis OA.

The imaging element 64c is configured by, for example, a CCD area sensor or a CMOS sensor to take an image of the light emitted from the illumination device 61. The imaging element 64c has a light-receiving surface 64c1 where a plurality of light-receiving elements are arranged two-dimensionally in a matrix. The light-receiving surface 64c1 is set to be perpendicular to the optical axis OA. When an imaging process by means of the camera 64 is performed, the imaging element 64c obtains image data. The obtained image data is sent to the image processing device 65.

According to the embodiment, the object-side lens 63, the diaphragm 64a and the element-side lens 64b configure an imaging optical system 66 that serves to form an image of the lights having the optical paths converted by the optical path conversion sheets 62a to 62d, on the imaging element 64c (on the light-receiving surface 64c thereof). The imaging optical system 66 is configured to serve as an object-side telecentric optical system. In other words, the imaging optical system 66 is configured, such that the principal rays are made parallel to the optical axis OA on the object side (on the tablets 5-side) of the object-side lens 63. The imaging optical system 66 of this embodiment is a both-side telecentric optical system.

The image processing device 65 is configured to perform defective/ non-defective determination of at least the side face portions 5a of the tablets 5, based on image data obtained from the light imaged on the imaging element 64c (on the light-receiving surface 64c1 thereof) (i.e., based on image data obtained by the camera 64). The image processing device 55 is configured by a so-called computer system including a CPU that serves as an arithmetic unit, a ROM that stores a variety of programs, and a RAM that temporarily stores a variety of data, such as operation data and input and output data. As shown in Fig. 7, the image processing device 65 includes an image memory 65a, an inspection results storage device 65b, a memory for determination 65c, an inspection conditions storage device 65d, a camera timing control device 65e, and a CPU and input-output interface 65f.

The image memory 65a is configured to store image data input from the camera 64. An inspection for the defective/ non-defective of the side face portions 5a is performed, based on the image data stored in this image memory 65a. The image data may be subjected to processing in the course of the inspection. The processing herein includes, for example, a masking process and a shading correction.

The inspection results storage device 65b is configured to store data indicating the results of the defective/ non-defective determination and statistic data obtained by processing the foregoing data in a stochastic and statistic manner..

The memory for determination 65c is configured to store various pieces of information used for the inspection. The various pieces of information include a program for determining the presence or the absence of any foreign substance, any dirt, or any damage (crack or the like) and a variety of numerical values used for determination as criteria for the defective/ non-defective determination.

The inspection conditions storage device 65d is configured to store, for example, the date and the time when each defective determination is given and inspection conditions used for the inspection.

The camera timing control device 65e is configured to control the imaging timing of the camera 64. More specifically, the camera timing control device 65e controls the camera 64 to perform imaging at respective timings when one line of the tablets 5 arrayed in the direction perpendicular to the transfer direction are located in a first position P1, are located in a second position P2, are located in a third position P3 and are located in a fourth position P4.

According to the embodiment, image data including portions relating to the one side face areas AR1 (as shown in Fig. 17: only parts of image data are shown in Fig. 17, Fig. 19, Fig. 21 and Fig. 24) are obtained by imaging the tablets 5 located in the first position P1. Furthermore, image data including portions relating to the one side face areas AR2 (as shown in Fig. 19) are obtained by imaging the tablets 5 located in the second position P2. Moreover, image data including portions relating to the one side face areas AR3 (as shown in Fig. 22) are obtained by imaging the tablets 5 located in the third position P3. Additionally, image data including portions relating to the one side face areas AR4 (as shown in Fig. 24) are obtained by imaging the tablets 5 located in the fourth position P4. Four different image data obtained as described above are image data respectively relating to the different one side face areas AR1, AR2, AR3 and AR4. These four different image data cover the entire circumferences of the side face portions 5a of all the tablets 5 in one line.

The camera timing control device 65e controls the imaging timings of the camera 64, in response to signals from an encoder (not shown) provided in the tablet inspection filling device 21 to obtain transfer amounts of the tablets 5.

The CPU and input-output interface 65f has a function of inputting and outputting a variety of data including image data and the results of defective/ non-defective determination and a function of executing a variety of programs. The CPU and input-output interface 65f uses the information stored in the memory for determination 65c and input image data to perform the defective/ non-defective determination of at least the side face portions 5a of the tablets 5. According to the embodiment, a predetermined defective/ non-defective determination process is performed for all the obtained image data, so as to determine whether there is any defective part in the entire circumference of the side face portion 5a of each tablet 5 by using the four different image data. The results of the defective/ non-defective determination are stored in the inspection results storage device 65b. According to the embodiment, an inspection is performed for, for example, the presence or the absence of any foreign substance or any dirt adhering to the tablet 5 and the presence or the absence of any crack of the tablet 5.

As described above in detail, the configuration of the embodiment allows for simultaneous imaging and inspection of the plurality of tablets 5, while simplifying the configuration of the device (the camera 64) including the imaging element 64c and the configuration of the tablet inspection device 23, thereby more certainly achieving size reduction and simplification of the tablet inspection device 23. Furthermore, the configuration of the embodiment allows for simultaneous imaging of the plurality of tablets 5 without requiring a plurality of the devices (cameras 64) respectively including the imaging element 64c and thereby more effectively achieves size reduction of the tablet inspection device 23. As a result, this can provide the tablet inspection device 23 of the simple and compact configuration.

Furthermore, the plurality of one side face areas AR1 to AR4 corresponding to the respective optical path conversion sheets 62a to 62d cover the entire circumference of the side face portion 5a of the tablet 5. The configuration of the embodiment thus allows for an inspection for the entire circumference of the side face portion 5a of the tablet 5.

Additionally, even in the case where the shape or the size of the tablets 5 as the inspection object is changed, there may be not always necessary to replace or adjust the optical path conversion sheets 62a to 62d. This accordingly enhances the convenience and the efficiency of the inspection.

The configuration of the embodiment also suppresses the part relating to each of the one side face areas AR1 to AR4 in the image data from being affected by the light reflected from the other part of the tablet 5 and provides the clearer contour and the clearer shape of the part relating to each of the one side face areas AR1 to AR4 and the clearer contour and the clearer shape of any defective part (for example, a dirt or a crack) located in each of the one side face areas AR1 to AR4 in the image data. As a result, this configuration can determine the presence or the absence of any defective part in the side face portion 5a with the high accuracy and can specify the location of the defective part with the higher precision.

Additionally, the diaphragm 64a serves to regulate the light imaged on the imaging element 64c out of the lights having the optical paths converted by the optical path conversion sheets 62a to 62d. Accordingly, the configuration of the embodiment enables appropriate image data for the inspection to be obtained more reliably and more readily.

Furthermore, the object-side lens 63 is a Fresnel lens and thereby has a relatively small thickness. This provides the tablet inspection device 23 of the more compact configuration.

Additionally, the optical path conversion sheets 62a to 62d have the sectional shapes described above. This configuration enables each of the optical path conversion sheets 62a to 62d to more reliably convert the optical path of the light reflected from the corresponding one of the one side face areas AR1 to AR4 into an optical path along the direction of the optical axis OA of the imaging optical system 66, while more effectively preventing the optical path of the light reflected from the other part of the tablet 5 from being converted into an optical path along the direction of the optical axis OA. This configuration more reliably provides the clearer contour and the clearer shape of the part relating to each of the one side face areas AR1 to AR4 and the clearer contour and the clearer shape of any defective part. As a result, this configuration can determine the presence or the absence of any defective part in the side face portion 5a with the higher accuracy and can specify the location of the defective part with the higher precision.

The present disclosure is not limited to the description of the above embodiment but may be implemented, for example, by configurations described below. The present disclosure may also be naturally implemented by applications and modifications other than those illustrated below.

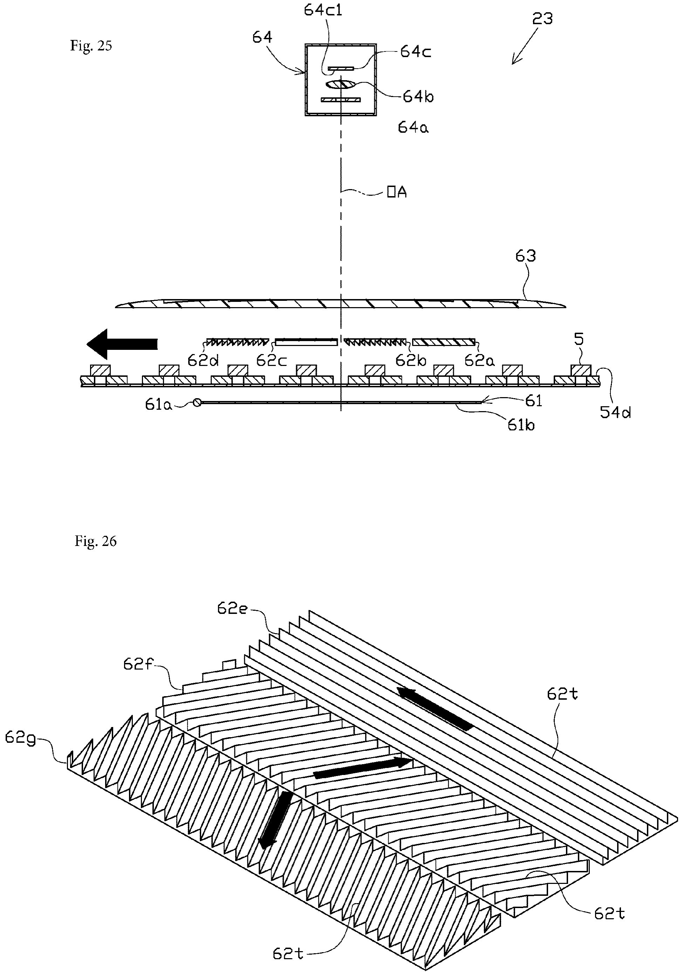

(a) According to the embodiment described above, the illumination device 61 is placed on an opposite side to the faces of the tablets 5 sucked by the suction belt 54. According to a modification, however, as shown in Fig. 25, the illumination device 61 may be placed on a side of the faces of the tablets 5 sucked by the suction belt 54. In this modification, the suction belt 54 is configured to allow the light emitted from the illumination device 61 to pass therethrough.

(b) According to the embodiment described above, the four optical path conversion sheets 62a to 62d are provided. The number of the optical path conversion sheets may, however, be changed appropriately.

For example, as shown in Fig. 26, a modification may be provided with three optical path conversion sheets 62e, 62f and 62g and configured such that a plurality of one side face areas corresponding to the respective optical path conversion sheets 62e, 62f and 62g cover the entire circumference of the side face portion 5a. In this modification, the extending directions of respective protrusions 62t in the optical path conversion sheets 62e, 62f and 62g may differ by 120 degrees each.

Another modification may be provided with two optical path conversion sheets or with five or more optical path conversion sheets and configured such that a plurality of one side face areas corresponding to the respective optical path conversion sheets cover the entire circumference of the side face portion 5a. In terms of further improving the inspection accuracy, it is preferable to set a plurality of one side face areas such as to at least partly overlap with each other, like the embodiment described above.

(c) According to the embodiment described above, each of the optical path conversion sheets 62a to 62d corresponds to one line of the tablets 5. According to a modification, however, each of the optical path conversion sheets 62a to 62d may be configured to correspond to multiple lines of the tablets 5. This modified configuration may thus allow for simultaneous imaging of multiple lines of the tablets 5 through each of the optical path conversion sheets 62a to 62d.

(d) The illumination device 61 of the above embodiment includes the light source 61a and the light guide plate 61b. The configuration of the illumination device may, however, be changed appropriately. For example, according to a modification, an illumination device may be configured by a large number of light sources with omission of a light guide plate.

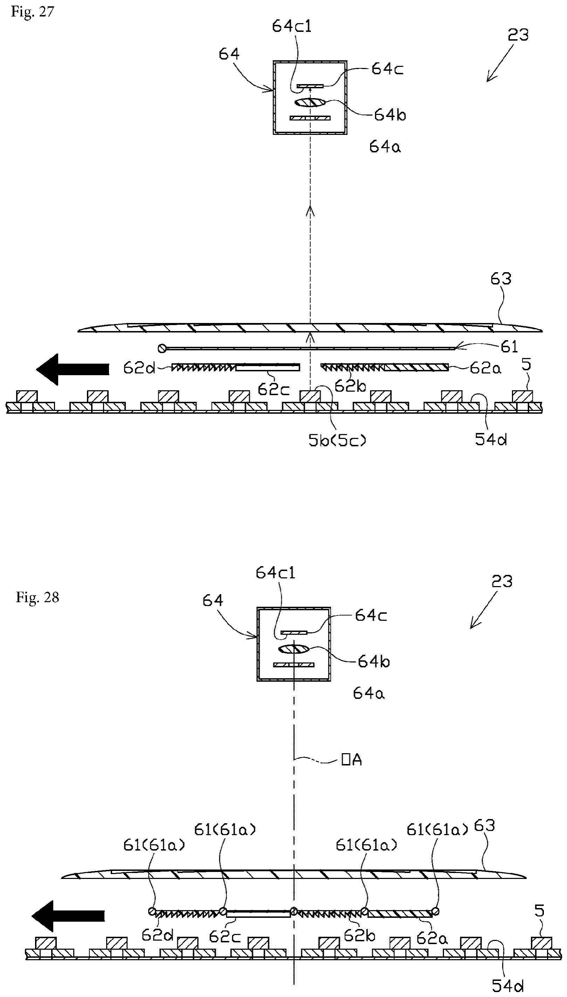

(e) As shown in Fig. 27, a modification may be configured to form a clearance between the adjacent optical path conversion sheets 62b and 62c and to take an image of the light, which is reflected from a face of the tablet 5 (the front face portion 5b or the rear face portion 5c) facing the imaging element 64c-side, through this clearance. According to this modification, the image processing device 65 may be configured to perform defective/ non-defective determination of the face of the tablet 5 facing the imaging element 64c-side, based on image data obtained by the light reflected from this face. This modified configuration enables an inspection to be performed for not only the side face portion 5a of the tablet 5 but the front face portion 5b or the rear face portion 5c of the tablet 5. This accordingly further enhances the inspection efficiency of the tablet 5.

(f) As shown in Fig. 28, the illumination device 61 may be configured by light sources 61a, and the illumination device 61 (the light sources 61a) may be placed between the plurality of optical path conversion sheets 62a to 62d. In this modified configuration, the illumination device 61 is placed within the space between the optical path conversion sheets 62a to 62d. This achieves size reduction of the tablet inspection device 23.

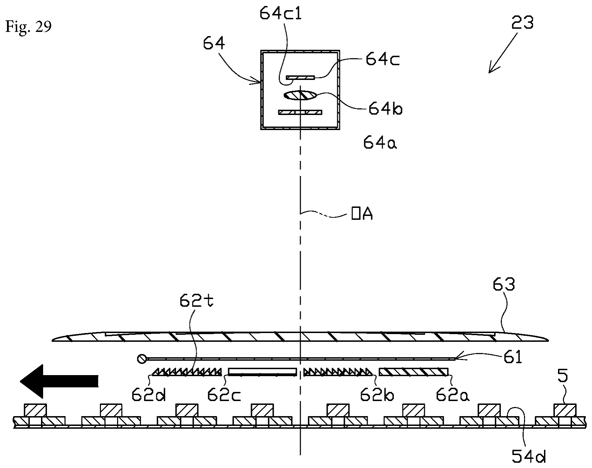

(g) According to the embodiment described above, the surfaces (the faces with the protrusions 62t formed thereon) of the optical path conversion sheets 62a to 62d are located on the tablets 5-side. According to a modification, however, as shown in Fig. 29, the surfaces of the optical path conversion sheets 62a to 62d may be located on an opposite side to the tablets 5, i.e., i.e., on the camera 64-side (the imaging element 64c-side).

(h) According to the embodiment described above, the tablet inspection device 23 (more specifically, the optical path conversion sheets 62a to 62d, the object-side lens 63 and the camera 64) is placed on an opposite side to the faces of the tablets 5 (sucked faces) sucked by the suction belt 54. According to a modification, however, the tablet inspection device 23 may be placed on a side of the sucked faces of the tablets 5. For example, the tablet inspection device 23 may be placed in a space surrounded by the suction belt 54. In this modification, the suction belt 54 may be configured to allow the light emitted from the illumination device 61 to pass therethrough.

(i) The embodiment described above is configured to perform imaging of the one side face areas AR1 to AR4 corresponding to the respective optical path conversion sheets 62a to 62d at the different timings. A modification may, however, be configured to match the timings of imaging with regard to at least two one side face areas among the plurality of one side face areas. For example, the modified configuration may perform imaging at an identical timing with regard to the two one side face areas AR1 and AR4. The modified configuration may also perform imaging at an identical timing with regard to all the one side face areas AR1 to AR4.

According to the embodiment described above, image data with regard to the entirety of the one side face area is obtained by one singe imaging operation. According to a modification, however, the image data with regard to the entirety of the one side face area may be obtained by a plurality of imaging operations.

(j) According to the embodiment described above, the tablet 5 is in a circular shape in planar view. The tablet 5 may, however, be in an oval shape in planar view, in an elliptical shape in planar view or the like.

(k) The tablets are not limited to pharmaceutical tablets but may be tablets for food and drink. The tablets also include not only uncoated plain tablets but sugar-coated tablets, film-coated tablets, orally disintegrating tablets, enteric tablets, and gelatine-coated tablets and also include a variety of capsules such as hard capsules and soft capsules.

(l) According to the embodiment described above, the tablets 5 are transferred in the arrangement of an array of five lines. The arrangement of the tablets 5 transferred is, however, not limited to the array of five lines but may be any array of multiple lines.

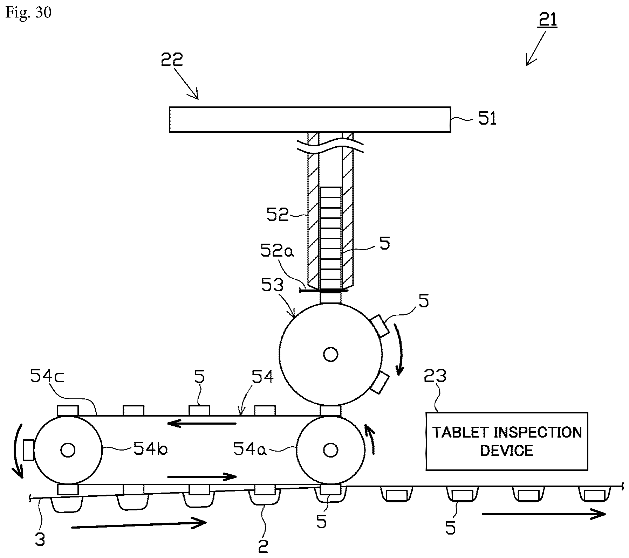

(m) According to the embodiment described above, the tablet inspection device 23 is configured to perform an inspection for the tablets 5 before being filled into the pocket portions 2. According to a modification, however, as shown in Fig. 30, the tablet inspection device 23 may be placed downstream of the tablet filling device 22 along the transfer path of the container film 3 and may be configured to perform an inspection for the tablets 5 filled in the pocket portions 2.

### Reference Signs List

5... tablet, 5a... side face portion, 5b... front face portion, 5c... rear face portion, 23... tablet inspection device, 61... illumination device (irradiation unit), 62a, 62b, 62c, 62d... optical path conversion sheets, 62r... rear face (of the optical path conversion sheet), 62t... protrusions, 62t1... approximately vertical face, 62t2... inclined face, 63... object-side lens, 64c... imaging element, 65... image processing device (determination unit), 66... imaging optical system, AR1, AR2, AR3, AR4... one side face areas, OA... optical axis

## Claims

1. A tablet inspection device configured to perform an inspection for side face portions of a plurality of tablets, which are transferred in an arrangement of multiple lines, the tablet inspection device comprising:
an irradiation unit configured to irradiate the plurality of tablets with predetermined light;
an imaging element used for imaging of the light emitted from the irradiation unit;
an optical path conversion sheet configured to convert an optical path of light that is emitted from the irradiation unit and that is reflected from a one side face area, which is continuous in a circumferential direction of the side face portion;
an imaging optical system configured to form an image of the light having the optical path converted by the optical path conversion sheet, on the imaging element; and
a determination unit configured to perform defective/ non-defective determination of the side face portion, based on image data obtained from the light imaged on the imaging element, wherein
the optical path conversion sheet is configured to be laid across the multiple lines of the tablets when being viewed from an imaging element-side, and a plurality of the optical path conversion sheets are provided along a transfer direction of the tablets,
the plurality of optical path conversion sheets are provided to respectively correspond to different one side face areas, and each of the optical path conversion sheets is configured to convert an optical path of light reflected from corresponding one of the one side face areas into an optical path along a direction of an optical axis of the imaging optical system, and
a plurality of the one side face areas corresponding to the respective optical path conversion sheets are configured to cover an entire circumference of the side face portion.

2. The tablet inspection device according to claim 1,
wherein the imaging optical system is configured to serve as an object-side telecentric optical system and is provided with a diaphragm, which is configured to regulate the light imaged on the imaging element.

3. The tablet inspection device according to claim 1,
wherein the imaging optical system is provided with an object-side lens that is configured to focus the lights having the optical paths converted by the optical path conversion sheets, and
the object-side lens is a Fresnel lens.

4. The tablet inspection device according to claim 1,
wherein each of the optical path conversion sheets has a surface with a plurality of protrusions formed thereon to be arranged in parallel to one another, wherein
each of the protrusions comprises:
an approximately vertical face having an angle of not less than 80 degrees and not greater than 95 degrees to a flat rear face of the optical path conversion sheet in a cross section perpendicular to an extending direction of the protrusions; and
an inclined face having an angle of not less than 10 degrees and not greater than 55 degrees to the rear face in the cross section.

5. The tablet inspection device according to claim 1,
wherein the irradiation unit is placed between the plurality of optical path conversion sheets.

6. The tablet inspection device according to claim 1,
wherein the imaging optical system is configured to form an image of light, which passes through between the plurality of optical path conversion sheets and which is reflected from a face of the tablet facing the imaging element-side, on the imaging element, and
the determination unit is configured to perform defective/ non-defective determination for the face of the tablet facing the imaging element-side, based on the image data.
